(19) **Europäisches Patentamt**

**European Patent Office**

**Office européen des brevets**

(11) **EP 0 898 745 B1**

(12) **EUROPÄISCHE PATENTSCHRIFT**

(45) Veröffentlichungstag und Bekanntmachung des Hinweises auf die Patenterteilung:
**23.02.2000 Patentblatt 2000/08**

(51) Int Cl.[7]: **G06F 11/22**

(21) Anmeldenummer: **97953612.5**

(22) Anmeldetag: **03.12.1997**

(86) Internationale Anmeldenummer:
**PCT/DE97/02830**

(87) Internationale Veröffentlichungsnummer:
**WO 98/28692 (02.07.1998 Gazette 1998/26)**

(54) **VERFAHREN ZUR ÜBERPRÜFUNG DER FUNKTIONSFÄHIGKEIT EINER RECHENEINHEIT**

METHOD OF CHECKING THE OPERABILITY OF A COMPUTING UNIT

PROCEDE POUR CONTROLER LA FIABILITE DE FONCTIONNEMENT D'UNE UNITE DE CALCUL

(84) Benannte Vertragsstaaten:
**DE FR GB IT**

(30) Priorität: **20.12.1996 DE 19653429**

(43) Veröffentlichungstag der Anmeldung:
**03.03.1999 Patentblatt 1999/09**

(73) Patentinhaber: **SIEMENS AKTIENGESELLSCHAFT**
**80333 München (DE)**

(72) Erfinder:
• **ZIEGLER, Herbert**
**D-94369 Rain (DE)**
• **MERL, Richard**
**D-92421 Schwandorf (DE)**
• **JOUVENAL, Horst**
**D-75446 Wiernsheim (DE)**
• **PETERS, Dietmar**
**D-93059 Regensburg (DE)**
• **SCHMID, Johann**
**D-93413 Cham (DE)**

(56) Entgegenhaltungen:
**EP-A- 0 082 722        EP-A- 0 154 551**
**US-A- 5 043 984**

## Beschreibung

Die Erfindung betrifft ein Verfahren zur Überprüfung der Funktionsfähigkeit einer Recheneinheit gemäß dem Oberbegriff des Patentanspruchs 1.

Verfahren zur Überprüfung der Funktionsfähigkeit einer Recheneinheit werden insbesondere in der Kraftfahrzeugtechnik eingesetzt, wenn die Recheneinheit eine sicherheitsrelevante Funktion des Kraftfahrzeuges steuert. Beispielsweise ist die Steuerung des Fahrgeschwindigkeitsreglers oder die Steuerung der Drosselklappenstellung sicherheitsrelevant, so daß die Recheneinheit, die den Fahrgeschwindigkeitsregler oder die Drosselklappenstellung steuert, auf eine korrekte Funktionsfähigkeit hin überprüft wird.

US-A-5 043 984 beschreibt ein Verfahren zur Überprüfung der Funktionsfähigkeit einer Recheneinheit gemäß dem Oberbegriff des Patentanspruchs 1.

Aus DE 44 38 714 A1 ist ein Verfahren zur Steuerung einer Antriebseinheit eines Fahrzeuges bekannt, bei dem zur Leistungssteuerung ein Rechenelement zur Durchführung von Steuerungsfunktionen und Überwachungsfunktionen vorgesehen ist. Das Rechenelement ist in drei unabhängige Ebenen unterteilt. Die erste Ebene führt die Steuerung der Leistung durch, die zweite Ebene überwacht die Durchführung der Steuerung und die dritte Ebene überwacht die Funktionsweise der zweiten Ebene.

Die zweite Ebene überwacht die Steuerfunktion zur Steuerung der Drosselklappe durch den Vergleich von aus Vorgabewerten und aus Einstellwerten der Leistung abgeleiteten Werten.

Die Aufgabe der Erfindung beruht darin, ein Verfahren zur Überwachung der Funktionsfähigkeit einer Recheneinheit bereitzustellen, mit dem Fehler sicher erkannt werden.

Die Aufgabe der Erfindung wird durch die Merkmale des Anspruchs 1 gelöst.

Ein wesentlicher Vorteil der Erfindung beruht darin, daß Grundfunktionen, die eine Recheneinheit zur Abarbeitung von Funktionen verwendet, überprüft werden.

Vorteilhafte Ausbildungen und Verbesserungen der Erfindung sind in den Unteransprüchen angegeben.

Die Erfindung wird anhand der Figuren näher erläutert; es zeigen:

Figur 1      den schematischen Aufbau eines Kraftfahrzeuges mit einem Steuergerät,
Figur 2      einen schematischen Programmablauf,
Figur 3      eine Befehlstabelle,
Figur 4      eine Ergebnistabelle,
Figur 5      einen Programmablauf,
Figur 6      ein erstes Unterprogramm,
Figur 7      ein zweites Unterprogramm und
Figur 8      ein drittes Unterprogramm.

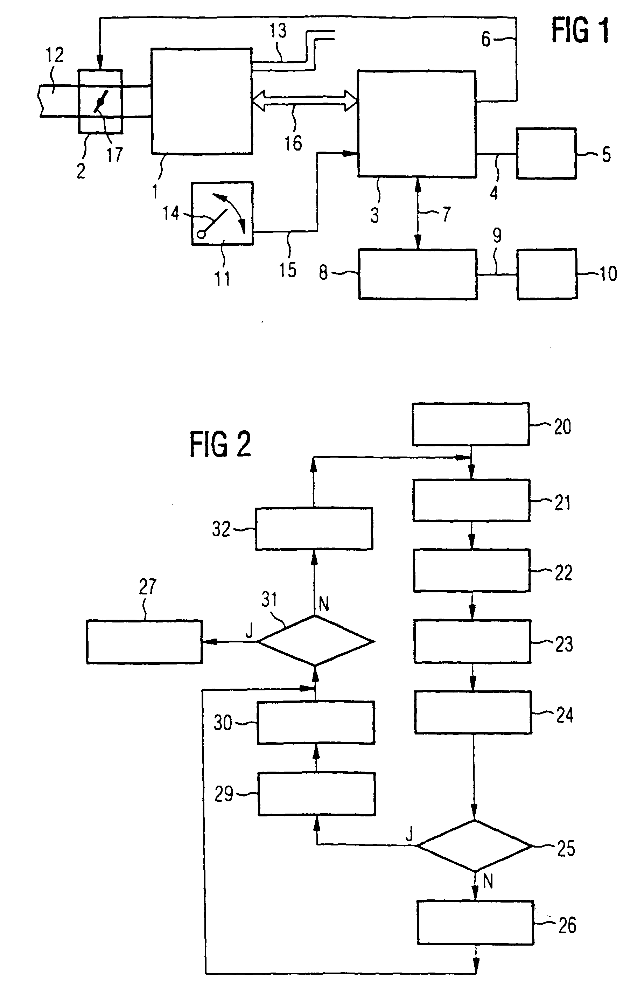

Figur 1 zeigt schematisch den Aufbau einer Steuerung für eine Brennkraftmaschine 1 mit einer Einspritzanlage, die einen Ansaugtrakt 12 aufweist, in der eine Drosselklappe 17 mit einem zugeordneten Drosselklappensteller 2 angeordnet ist. Die Brennkraftmaschine 1 weist weiterhin einen Abgastrakt 13 zum Ausstoßen der Abgase auf. Zudem ist ein Gaspedal 14 vorgesehen, dessen Stellung mit einem Gaspedalgeber 11 ermittelt wird.

Der Gaspedalgeber 11 ist über eine Sensorleitung 15 mit einer ersten Recheneinheit 3 verbunden, die über eine Steuerleitung 6 mit dem Drosselklappensteller 2, über eine erste Datenleitung 4 mit einem ersten Speicher 5, über einen ersten Datenbus 16 mit der Brennkraftmaschine 1 und über einen zweiten Datenbus 7 mit einer zweiten Recheneinheit 8 in Verbindung steht. Die zweite Recheneinheit 8 ist über eine zweite Datenleitung 9 an einen zweiten Speicher 10 angeschlossen.

Das erfindungsgemäße Verfahren wird im folgenden am Beispiel der Leistungssteuerung einer Brennkraftmaschine 1 beschrieben, bei der die Leistung der Brennkraftmaschine über die Stellung der Drosselklappe 17 eingestellt wird.

Die vom Fahrer gewünschte Leistung wird über eine entsprechende Betätigung des Gaspedals 14 angezeigt. Die Stellung des Gaspedals 14 wird vom Gaspedalgeber 11 gemessen und an das erste Steuergerät 3 weitergegeben. Das erste Steuergerät 3 setzt nun den Fahrerwunsch in eine entsprechende Ansteuerung des Drosselklappenstellers 2 um, der die Drosselklappe 17 entsprechend einstellt.

Die erste Recheneinheit 3 berechnet dazu aus dem Fahrerwunsch unter Berücksichtigung von Parametern der Brennkraftmaschine 1, die der ersten Recheneinheit 3 über den ersten Datenbus 16 zugeführt werden, und unter Verwendung von Berechnungs- und Steuerungsfunktionen, die im ersten Speicher 5 abgelegt sind, das Ansteuersignal mit dem der Drosselklappensteller 2 angesteuert wird. Vorzugsweise werden Parameter aus der Umgebung wie z.B. die Außentemperatur oder die Feuchtigkeit berücksichtigt.

Die korrekte Funktionsweise der ersten Recheneinheit 3 wird von der zweiten Recheneinheit 8 durch einen Datenaustausch über den zweiten Datenbus 7 überprüft, wobei die zweite Recheneinheit 8 auf Daten zugreift, die im zweiten Speicher 10 abgelegt sind.

Figur 2 zeigt ein schematisches Verfahren, mit dem eine korrekte Funktionsweise der ersten Recheneinheit 3 von der zweiten Recheneinheit 8 überprüft wird.

Bei Programmpunkt 20 wird nach dem Einschalten der Spannungsversorgung eine Initialisierung vorgenommen, bei der vorgegebene Anfangsparameter aus dem ersten und zweiten Speicher 5, 10 gelesen werden.

Anschließend wird bei Programmpunkt 21 von der zweiten Recheneinheit 8 der ersten Recheneinheit 3 ein Startwert zugeführt. Dann gibt die zweite Recheneinheit 8 bei Programmpunkt 22 der ersten Recheneinheit 3 eine Rechenvorschrift vor.

Nach Erhalt des Startwertes und der Rechenvorschrift arbeitet die erste Recheneinheit 3 die vorgegebene Rechenvorschrift mit dem vorgegebenen Startwert bei Programmpunkt 23 durch. Bei Programmpunkt 24 gibt die erste Recheneinheit 3 das aus der vorgegebenen Rechenvorschrift und dem vorgegebenen Startwert berechnete Ergebnis an die zweite Recheneinheit 8.

Die zweite Recheneinheit 8 vergleicht das von der ersten Recheneinheit 3 gelieferte Ergebnis mit einem Vergleichsergebnis, das im zweiten Speicher 10 in Abhängigkeit von dem vorgegebenen Startwert und der vorgegebenen Rechenvorschrift abgelegt ist. Ergibt der Vergleich bei Programmpunkt 25, daß das Ergebnis und das Vergleichsergebnis übereinstimmen, so wird nach Programmpunkt 29 verzweigt.

Ergibt jedoch der Vergleich bei Programmpunkt 25, daß das Ergebnis und das Vergleichsergebnis nicht übereinstimmen, so wird anschließend bei Programmpunkt 26 von der zweiten Recheneinheit 8 ein Fehlerzähler um den Wert 1 inkrementiert. Nach Abarbeitung von Programmpunkt 26 wird zu Programmpunkt 31 verzweigt.

Bei Programmpunkt 29 gibt die zweite Recheneinheit 8 die Information an die erste Recheneinheit 3, daß das gelieferte Ergebnis mit dem Vergleichsergebnis übereinstimmt. Daraufhin überprüft die zweite Recheneinheit 8 den Fehlerzähler und erniedrigt den Wert des Fehlerzählers bei Programmpunkt 30, wenn dieser größer als null ist.

Anschließend wird bei Programmpunkt 31 der Wert des Fehlerzählers von der zweiten Recheneinheit 3 mit einem Maximalwert verglichen. Ergibt der Vergleich, daß der Fehlerzähler über dem vorgegebenen Maximalwert liegt, so wird beim folgenden Programmpunkt 27 die erste Recheneinheit 3 von der zweiten Recheneinheit 8 in eine Notlauffunktion geschaltet, in der die Steuerung der Brennkraftmaschine 1 nur noch in vorgegebenen, begrenzten Leistungsbereichen möglich ist, so daß eine Gefährdung so weit wie möglich begrenzt ist, aber zudem noch die nächste Werkstatt erreicht werden kann.

Eine Weiterbildung der Erfindung wird durch folgende Funktion erreicht: Die zweite Recheneinheit 8 führt der ersten Recheneinheit 3 ein Fehlersignal zu, wenn das von der ersten Recheneinheit 3 berechnete Ergebnis nicht mit dem entsprechenden, abgelegten Vergleichsergebnis übereinstimmt. Die erste Recheneinheit 3 erhöht bei Erhalt eines Fehlersignals den Fehlerzähler um den Wert 1. Die zweite Recheneinheit 8 führt bei einem richtigen Ergebnis der ersten Recheneinheit 3 ein Antwortsignal zu. Daraufhin erniedrigt die erste Recheneinheit 3 beim Empfang eines Antwortsignals den Fehlerzähler um den Wert 1. Die zweite Recheneinheit 8 überprüft die Erniedrigung des Fehlerzählers und gibt ein Alarmsignal an die erste Recheneinheit 3, wenn die erste Recheneinheit 3 bei einem Antwortsignal den Fehlerzähler nicht erniedrigt. Die erste Recheneinheit 3 geht bei einem Fehlersignal in eine Notlauffunktion, bei der nur eine beschränkte Leistungssteuerung möglich ist.

Ergibt die Abfrage bei Programmpunkt 31 jedoch, daß der Fehlerzähler unter dem vorgegebenen Maximalwert liegt, so wird nach Programmpunkt 32 verzweigt.

Bei Programmpunkt 32 wählt die zweite Recheneinheit 8 aus dem zweiten Speicher 10 einen anderen Startwert und/oder eine andere Rechenvorschrift aus, die dann anschließend bei Programmpunkt 21 und bei Programmpunkt 22 der ersten Recheneinheit 3 vorgegeben wird. Vorzugsweise wählt die zweite Recheneinheit 8 bei einem Fehlerzähler, der ungleich 0 ist, bei dem nächsten Testprogramm die gleiche Rechenvorschrift und vorzugsweise den gleichen Startwert aus, mit dem das falsche Ergebnis von der ersten Recheneinheit 3 berechnet wurde. Die gleiche Rechenvorschrift wird so lange verwendet, bis der Fehler behoben ist oder die erste Recheneinheit 3 in eine Notlauffunktion geschaltet wird.

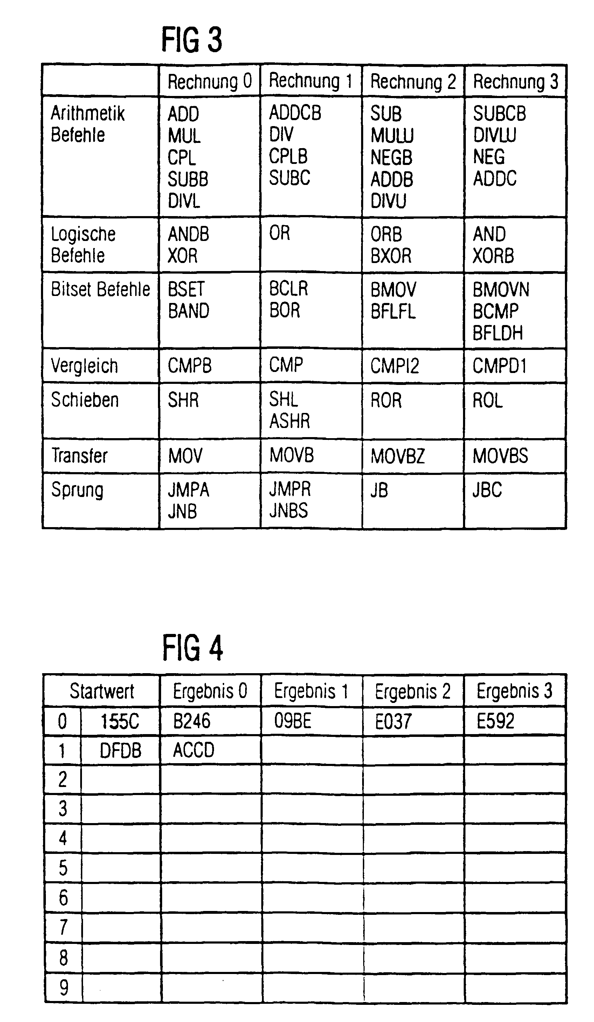

Figur 3 zeigt eine Tabelle, in der als Beispiel der Befehlssatz der ersten Recheneinheit 3 angegeben ist, mit der die erste Recheneinheit 3 Programme und/oder Berechnungen abarbeitet. Die Befehle des Befehlssatzes sind in diesem Fall vier verschiedenen Rechenvorschriften zugeordnet, die mit Rechnung 0, Rechnung 1, Rechnung 2 und Rechnung 3 bezeichnet sind. Der Befehlssatz weist als Befehlsarten arithmetische Befehle, logische Befehle, Bitsetz-Befehle, Vergleichsbefehle, Schiebebefehle, Transferbefehle und Sprungbefehle auf.

In jeder Rechenvorschrift sind vorzugsweise mindestens ein arithmetischer Befehl, ein logischer Befehl, ein Bitsetz-Befehl, ein Vergleichsbefehl, ein Schiebebefehl, ein Transferbefehl und ein Sprungbefehl enthalten. Die in Figur 3 dargestellte Rechentabelle ist im ersten Speicher 5 abgelegt.

Figur 4 zeigt eine Ergebnistabelle, die in Abhängigkeit vom Startwert das Ergebnis der Rechenvorschriften Rechnung 0 bis 3 darstellt, das bei einer korrekten Abarbeitung der Rechenvorschrift durch die erste Recheneinheit 3 erhalten wird. Dabei ist mit der Bezeichnung Ergebnis 0, Ergebnis 1, Ergebnis 2 und Ergebnis 3 das Ergebnis der Rechnung 0, Rechnung 1, Rechnung 2 und Rechnung 3 bezeichnet.

In Figur 4 ist für den Startwert 0, der einem Hexadezimalwert von 155 C entspricht, das Ergebnis 0 der Rechnung 0 mit einem Hexadezimalwert von B246 angegeben.

Wird mit dem Startwert 155 C die Rechnung 1 von der ersten Recheneinheit 3 durchgeführt, so muß bei einer korrekten Funktionsweise der Recheneinheit 3 das Ergebnis 1 mit dem Hexadezimalwert 09BE erhalten werden.

Bei einem Startwert mit dem Hexadezimalwert DFDB muß von der ersten Recheneinheit 3 bei der Abarbeitung der Rechnung 0 das Ergebnis 0 mit dem Hexadezimalwert von ACCD erhalten werden, wenn die erste Recheneinheit 3 korrekt arbeitet.

Die in Figur 3 dargestellten Rechenvorschriften stellen bevorzugte Rechenvorschriften dar. In einfachen Fällen besteht eine Rechenvorschrift aus nur mindestens einem Befehl des Befehlsatzes der zu testenden Recheneinheit.

Die in Figur 3 als Beispiel angegebenen Befehle sind Assembler-Befehle. Bei der Programmierung der Rechenvorschriften in der Recheneinheit 3 sollten die Rechenvorschriften vorzugsweise direkt in der entsprechenden Maschinensprache programmiert werden, da nur dadurch der genaue Befehlssatz festgelegt wird. Bei dem Beispiel des Assembler-Befehlssatzes sollte die Rechenvorschriften 0 bis 3 in Assembler programmiert werden.

Die Rechnung 0 ist so zu verstehen, daß mit dem von der zweiten Recheneinheit 8 vorgegebenen Startwert die Assembler-Befehle in der Spalte Rechnung 0 von oben nach unten durchgerechnet werden. Das heißt für die Rechnung 0, daß ausgehend von dem Wert 0 der Startwert hinzuaddiert wird (ADD) und als Ergebnis die Hexadezimalwert 155 C erhalten wird. Das Ergebnis wird anschließend mit dem Startwert multipliziert (MUL). Auf diese Weise werden alle Assembler-Befehle der Rechnung 0 nacheinander in der Weise abgearbeitet, daß das Ergebnis des vorhergehenden Assembler-Befehles für den nächsten Assembler-Befehl wieder verwendet wird. Somit gibt jeder Assembler-Befehl bei einer Fehlfunktion einen Beitrag zum Endergebnis.

Sind alle Befehle der Rechenvorschrift 0 abgearbeitet, so wird das letzte Ergebnis, d.h. das Endergebnis das nach dem Sprungbefehl JNB erhalten wird, der zweiten Recheneinheit 8 als Ergebnis bei Programmpunkt 24 zugeführt.

In diesem Ausführungsbeispiel wurden die Assembler-Befehle angegeben, die vorzugsweise einzeln oder, wie in den Rechenvorschriften der Figur 3 dargestellt ist, mehrere auf eine korrekte Funktionsweise hin überprüft werden.

Werden bei der Programmierung andere Maschinenbefehle, d.h. Befehlssatz (Instruction Set) der Recheneinheit 3 verwendet, so werden diese zur Überprüfung der korrekten Funktionsweise der ersten Recheneinheit 3 mit Hilfe einer entsprechenden Rechenvorschrift überprüft.

Mit Maschinenbefehl sind die Befehle bezeichnet, die die kleinsten vorgegebenen Befehle einer Programmiersprache darstellen, mit denen ein Programm erstellt wird, wie z.B. bei Verwendung der Assembler-Sprache die einzelnen Assembler Codes.

Der wesentliche Vorteil der Erfindung beruht darin, daß die Befehle des Befehlssatzes (Instruction Set), vorzugsweise alle Befehle des Befehlssatzes, mit dem die erste Recheneinheit 3 ein Programm oder eine Berechnung abarbeitet bzw. abarbeiten kann, auf eine korrekte Funktionsweise hin einzeln oder als Gruppe mit mehreren Befehlen in einer Testrechnung überprüft werden.

Vorzugsweise werden Befehlsketten überprüft, die von den verschiedenen Arten der möglichen Befehle mindestens einen Befehl aufweisen, so daß die verschiedenen Befehlsarten mit einer einzigen Rechenvorschrift überprüft werden.

Im folgenden wird anhand eines Beispiels, das nur wenige Befehle eines Befehlssatzes, in diesem Fall des Assembler-Codes, für die Recheneinheit 3 umfaßt, das Prinzip der Funktionsüberwachung verdeutlicht. Vorzugsweise werden möglichst viele der Befehle, am besten alle Befehle mit Testrechnungen überprüft, um die Funktionsfähigkeit der Recheneinheit 3 zu überwachen.

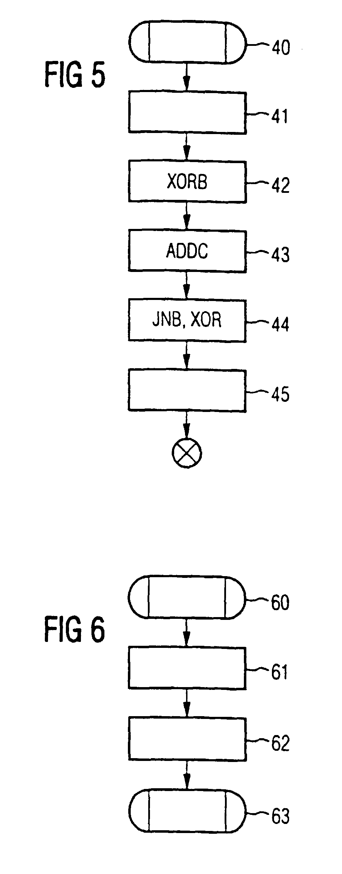

Figur 5 zeigt im Überblick die Berechnung einer Rechenvorschrift, die aus den Assembler-Befehlen XORB, ADDC, JNB und XOR besteht. Die Assemblerbefehle sind beispielsweise in dem Instruction Set Manual des 16 Bit CMOS Single-Chip-Mikrocontroller der Firma Siemens beschrieben.

Bei Programmpunkt 40 wird die Rechenvorschrift entsprechend dem Programmpunkt 23 der Figur 2 gestartet. Zunächst wird bei Programmpunkt 41 der Speicherplatz, an dem das Ergebnis der Rechenvorschrift abgelegt wird, mit einem Fehlerwert belegt. Diese Vorbelegung hat den Vorteil, daß bei einem Abbruch der Rechenvorschrift das Ergebnis mit einem Fehlerergebnis belegt ist und somit der Abbruch anhand des Ergebnisses als Fehler erkannt wird.

Anschließend wird bei Programmpunkt 42 der Assemblerbefehl XORB durchgeführt. Die Durchführung dieses Befehls ist genauer in Figur 6 dargestellt. Der Assemblerbefehl XORB stellt eine logische exclusive ODER-Verknüpfung dar, bei der bitweise eine logische, exclusive ODER-Verknüpfung zwischen einem ersten und einem zweiten Wert durchgeführt wird und das Ergebnis als neuer erster Wert abgelegt wird:

$$W1 = XORB (W1, W2),$$

wobei mit W1 und mit W2 der erste und der zweite Wert bezeichnet sind.

Bei der Abarbeitung von Rechenvorschriften wie den Assembler-Befehlen sind neben dem Ergebnis noch Bedingungsbits vorgesehen, die eine weitere Information über die Abarbeitung der Rechenvorschrift wiedergeben. In dem Beispiel des 16 Bit CMOS Single-Chip-Mikrocontroller sind fünf Bedingungsbits vorgesehen, die abhängig von dem Ergebnis des durchgeführten Assemblerbefehls mit unterschiedlichen Werten belegt werden. Die fünf Bedingungsbits sind in einem Bitregister abgelegt und werden im folgenden als E-Bit, Z-Bit, V-Bit, C-Bit und N-Bit bezeichnet. Das N-Bit weist den Wert 1 auf, wenn das höchste Bit (most significant bit) des Ergebnisses gesetzt ist. Das N-Bit wird mit dem Wert 0 besetzt, wenn das höchste Bit des Ergebnisses nicht gesetzt wird.

Das C-Bit weist den Wert 1 auf , wenn ein Überlauf an der höchsten Bitstelle auftritt. Das C-Bit weist den Wert 0 auf, wenn kein Überlauf bei der Abarbeitung des Assemblerbefehls auftritt. Das V-Bit weist den Wert 1 auf, wenn ein arithmetischer Überlauf bei der Abarbeitung des Assemblerbefehls auftritt. Das V-Bit weist den Wert 0 auf, wenn kein arithmetischer Überlauf bei der Abarbeitung des Assemblerbefehls auftritt. Das Z-Bit weist den Wert 1 auf, wenn das Ergebnis des Assemblerbefehls den Wert 0 aufweist. Das Z-Bit weist den Wert 0 auf, wenn das Ergebnis des Assemblerbefehls nicht den Wert 0 aufweist. Das E-Bit weist den Wert 1 auf, wenn der zweite Wert (W2) die kleinste negative Zahl darstellt, ansonsten weist das E-Bit den Wert 0 auf. Für den Assemblerbefehl XORB sind das V-Bit und das C-Bit immer mit 0 besetzt.

Bei Programmpunkt 60 wird die Durchführung des Assemblerbefehls XORB gestartet, wobei als erster Wert ein Startwert aus der Tabelle der Figur 4 verwendet wird, der von der zweiten Recheneinheit 8 der ersten Recheneinheit 3 zugeführt wird. Ist der Startwert ein 16 Bit breites Datenwort, so wird für die Durchführung des Assemblerbefehls XORB nur das HIGH-Bit des Startwertes, d. h. die acht höherwertigen Bits verwendet.

Als zweiten Wert (W2) wird der Wert (value) einer vorgegebenen Maske, die acht Bit aus dem Startwert herausfiltert, verwendet. In diesem Ausführungsbeispiel besteht die verwendete Maske aus den acht niedrigwertigeren Bits des Startwertes.

Nach der Durchführung der Rechenoperation XORB wird bei Programmpunkt 61 das Ergebnis als Zwischenergebnis in einem temporären Register abgespeichert. Daraufhin wird bei Programmpunkt 62 als neues Zwischenergebnis das bei Programmpunkt 61 abgespeicherte Zwischenergebnis plus dem Wert des Bitregisters abgelegt, wobei die nicht durch den Assembler-Befehl XORB beeinflußten Bedingungsbits mit dem Wert 0 belegt wurden:

$$ZW = ZW + (Bitregister).$$

Anschließend wird bei Programmpunkt 63 nach Programmpunkt 43 der Figur 5 zurückverzweigt.

Bei Programmpunkt 43 wird der Assemblerbefehl ADDC getestet, der eine Integer-Addition unter Berücksichtigung des Übertragsbits, d.h. des C-Bits, durchführt:

$$ADDC (W1, W2) = W1 + W2 + C\text{-Bit}.$$

Der ADDC-Assemblerbefehl führt eine binäre Addition des Zweierkomplements des zweiten Wertes und des ersten Wertes durch, wobei zusätzlich das im letzten Rechenschritt erzeugte C-Bit addiert wird. Das Ergebnis der ADDC-Rechenoperation wird als neuer erster Wert W1 abgespeichert:

$$W1 = ADDC (W1,W2).$$

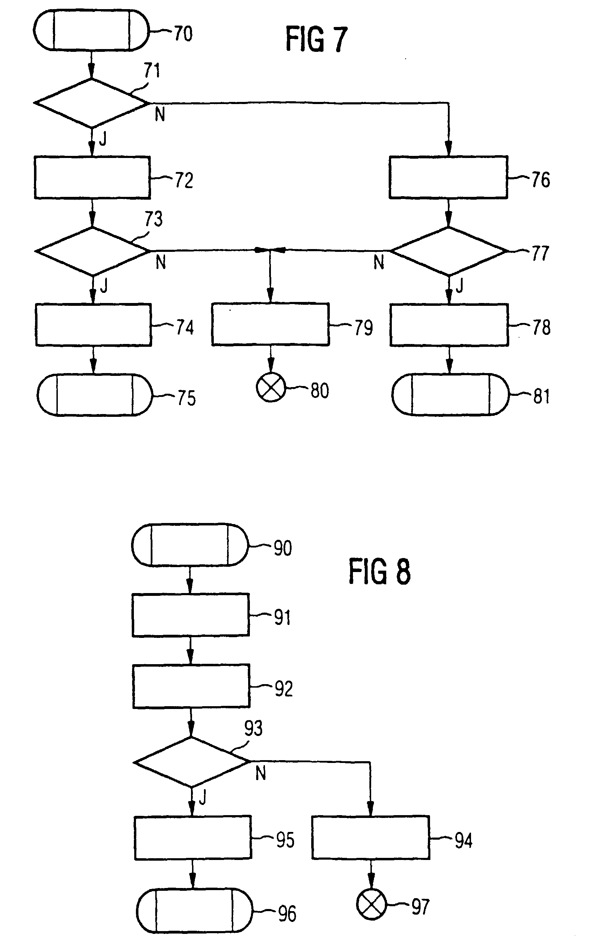

Die Durchführung der Testrechnung für die ADDC-Rechenoperation wird in Figur 7 näher erläutert. Von Programmpunkt 43 wird zu Programmpunkt 70 verzweigt, bei dem die Testrechnung für die ADDC-Rechenoperation gestartet wird. Bei Programmpunkt 71 wird überprüft, ob das fünfzehnte Bit des Startwertes, der aus der Tabelle der Figur 4 entnommen ist, den Wert 1 aufweist. Ist dies der Fall, so wird nach Programmpunkt 72 verzweigt. Bei Programmpunkt 72 wird ein Arbeitsregister AR mit dem Ergebnis der ADDC-Rechenoperation belegt, wobei als erster Wert und als zweiter Wert jeweils der Startwert verwendet wird:

$$AR = ADDC(W1,W1) = ADDC(Startwert, Startwert).$$

Anschließend wird bei Programmpunkt 73 überprüft, ob das C-Bit für den durchgeführten ADDC-Befehl den Wert 1 aufweist. Ist dies der Fall, so wird daraufhin bei Programmpunkt 74 als neues Zwischenergebnis ZW(n) die Summe aus dem Arbeitsregister AR und dem bisherigen Zwischenergebnis ZW(n-1) abgelegt:

$$ZW(n) = AR + ZW(n-1).$$

Anschließend wird bei Programmpunkt 75 zu Programmpunkt 44 der Figur 5 zurückverzweigt.

Ergibt die Abfrage bei Programmpunkt 73, daß das C-Bit nicht den Wert 1 aufweist, so wird nach Programmpunkt 79 verzweigt, bei der als Ergebnis ein Fehlerwert abgelegt wird und anschließend bei Programmpunkt 80 die Testrechnung beendet.

Ergibt die Abfrage bei Programmpunkt 71, daß das fünfzehnte Bit des Startwertes nicht den Wert 1 aufweist, so wird anschließend nach Programmpunkt 76 verzweigt. Nach Programmpunkt 76 wird in das Arbeitsregister AR der Wert der Rechenoperation ADDC abgelegt, wobei als erster Wert und als zweiter Wert jeweils der Startwert verwendet wird:

$$AR = ADDC(Startwert, Startwert).$$

Anschließend wird bei Programmpunkt 77 das C-Bit des ADDC-Befehls überprüft. Weist das C-Bit den Wert 0 auf, so wird nach Programmpunkt 78 verzweigt. Bei Programmpunkt 78 wird als neues Zwischenergebnis ZW(n) die Summe aus dem Wert des Arbeitsregisters und dem Wert des bisherigen Zwischenergebnisses ZW(n-1)abgelegt:

$$ZW(n)=AR+ZW(n-1).$$

Anschließend wird bei Programmpunkt 81 zu Programmpunkt 44 der Figur 5 zurückverzweigt.

Ergibt die Abfrage bei Programmpunkt 77, daß das C-Bit nicht den Wert 0 aufweist, so wird nach Programmpunkt 79 verzweigt. Bei Programmpunkt 79 wird als Ergebnis ein Fehlerwert abgelegt und anschließend die Testrechnung bei Programmpunkt 80 beendet.

Die Testrechnung für Programmpunkt 44 umfaßt die Assemblerbefehle JNB und XOR. Der Assemblerbefehl JNB stellt einen bedingten Sprungbefehl dar, der ausgeführt wird, wenn ein vorgegebenes Bit den Wert 0 aufweist. Zur Festlegung welcher Befehl als nächstes ausgeführt werden soll, wird ein Befehlszeiger verwendet, der auf eine aktuelle Adresse gerichtet ist, an der der als nächstes auszuführende Befehl abgelegt ist.

Wird der Sprungbefehl JNB ausgeführt, so wird der Befehlszeiger um eine vorgegebene Anzahl von Adressen verschoben, die durch den zweiten Wert W2 bestimmt wird. Weist das vorgegebene Bit jedoch den Wert 1 aufweist, so wird als nächster Befehl der Befehl durchgeführt, der an der aktuellen Adresse abgelegt ist.

Die XOR-Rechenoperation stellt eine logische, exclusive ODER-Verknüpfung zwischen einem ersten und einem zweiten Wert W1, W2 dar: XOR (W1, W2). Das Ergebnis der XOR-Rechenoperation wird als neuer Wert W1 abgelegt:

$$W1=XOR(W1,W2).$$

Von Programmpunkt 44 wird nach Programmpunkt 90 verzweigt, bei dem die Testrechnung für den JNB- und XOR-Befehl gestartet wird. Bei Programmpunkt 91 wird das temporäre Arbeitsregister AR mit dem vorgegebenen Startwert der Tabelle der Figur 4 belegt:

$$AR=Startwert.$$

Anschließend wird bei Programmpunkt 92 das vierte Bit des Arbeitsregisters mit dem Wert 0 belegt. Daraufhin wird bei Programmpunkt 93 der JNB-Befehl durchgeführt, wobei als erster Wert W1 das vierte Bit des Arbeitsregisters AR verwendet wird. Der zweite Wert W2 ist so ausgelegt, daß der Befehlszeiger auf eine neue Adresse springt, an der als Befehl eine Fehlerroutine abgelegt ist. Ergibt nun die Durchführung des JNB-Befehls, daß das vierte Bit des Arbeitsregisters nicht 0 ist, so wird entsprechend dem vorgegebenen zweiten Wert W2 nach Programmpunkt 94 verzweigt, bei dem die Fehlerroutine gestartet wird, bei der Speicher für das Ergebnis mit einem Fehlerwert belegt wird und anschließend bei Programmpunkt 97 das Programm beendet wird.

Ergibt die Abfrage bei Programmpunkt 93 jedoch, daß das vierte Bit den Wert 0 aufweist, so wird nach Programmpunkt 95 verzweigt. Bei Programmpunkt 95 wird als neues Zwischenergebnis ZW(n) das Ergebnis der XOR-Rechenoperation mit dem bisherigen Zwischenergebnis ZW(n-1) als ersten Wert W1 und dem Arbeitsregister AR als zweiten Wert W2 abgespeichert:

$$ZW(n) = XOR (ZW(n-1),AR).$$

Anschließend wird bei Programmpunkt 96 zu Programmpunkt 45 zurückverzweigt wird.

Bei Programmpunkt 45 gibt die erste Recheneinheit 3 entsprechend dem Programmpunkt 24 bei Figur 2 das Ergebnis an die zweite Recheneinheit 8, die das Ergebnis mit einem Vergleichsergebnis vergleicht und eine Fehlfunktion der ersten Recheneinheit 3 erkennt, wenn das Ergebnis nicht mit dem Vergleichsergebnis vorzugsweise in einer vorgegebenen Relation übereinstimmt. Anschließend wird das Programm beendet.

Die in Figur 5 verwendeten Startwerte sind vorzugsweise immer der gleiche Startwert der Tabelle der Figur 4, der der entsprechenden Rechenvorschrift zugeordnet ist.

Die Überprüfung von mehreren Befehlen in einer Befehlskette, bei der das Ergebnis eines Befehles für den folgenden Befehl wieder verwendet wird, bietet den Vorteil, daß zum Endergebnis jeder Befehl beiträgt und somit auch kleinere Ungenauigkeiten einzelner Befehle sich auf diese Weise verstärken und somit in der Summe im Endergebnis zu einem merklichen Fehler führen, der eine Aussage über eine Fehlfunktion der Recheneinheit ermöglicht.

Eine einfache Überprüfung der ersten Recheneinheit 3 besteht darin, bei der Abarbeitung eines Befehls den korrekten Wert bzw. die korrekte Veränderung mindestens eines Bedingungsbits dieses Befehls zu überprüfen. Bei einem falschen Bedingungsbit kann auf eine Fehlfunktion der ersten Recheneinheit 3 geschlossen werden. Die Bedingungsbits der ersten Recheneinheit 3 überprüft entweder die erste oder die zweite Recheneinheit 3,8.

**Patentansprüche**

1. Verfahren zur Überprüfung der Funktionsfähigkeit einer ersten Recheneinheit (3) durch eine zweite Recheneinheit (8), die der ersten Recheneinheit (3) eine Rechenvorschrift und einen Startwert vorgibt, wobei die erste Recheneinheit (3) unter Verwendung des Startwertes und der Rechenvorschrift ein Ergebnis berechnet und das Ergebnis der zweiten Recheneinheit (8) übergibt, die das Ergebnis mit einem Vergleichsergebnis vergleicht, dadurch gekennzeichnet, daß als Rechenvorschrift ein Befehl des Befehlssatzes vorgegeben wird, den die erste Recheneinheit (3) zur Abarbeitung eines Programmes oder einer Rechenvorschrift verwendet.

2. Verfahren nach Anspruch 1, dadurch gekennzeichnet, daß die Rechenvorschrift mindestens einen arithmetischen Befehl und/oder einen logischen Befehl und/oder einen Bitsetbefehl und/oder einen Vergleichsbefehl und/oder einen Schiebebefehl und/oder einen Transferbefehl und/oder einen Sprungbefehl des verwendeten Befehlssatzes aufweist.

3. Verfahren nach Anspruch 1, dadurch gekennzeichnet, daß die zweite Recheneinheit (8) der ersten Recheneinheit (3) zyklisch verschiedene Rechenvorschriften und verschiedene Startwerte vorgibt.

4. Verfahren nach Anspruch 3, dadurch gekennzeichnet, daß verschiedene Rechenvorschriften für die gleiche Befehlsart unterschiedliche Befehle aufweisen.

5. Verfahren nach Anspruch 1, dadurch gekennzeichnet, daß die zweite Recheneinheit (8) der ersten Recheneinheit (3) ein Fehlersignal zuführt, wenn das von der ersten Recheneinheit (3) berechnete Ergebnis nicht mit dem entsprechenden Vergleichsergebnis übereinstimmt, daß die erste Recheneinheit (3) bei Erhalt eines Fehlersignals einen Fehlerzähler um einen vorgegebenen Wert erhöht, daß die zweite Recheneinheit (8) bei einem richtigen Ergebnis der ersten Recheneinheit (3) ein Antwortsignal zuführt, daß die erste Recheneinheit (3) beim Empfang eines Antwortsignals den Fehlerzähler um den vorgegebenen Wert 1 erniedrigt, daß die zweite Recheneinheit (8) die Erniedrigung des Fehlerzählers überprüft, und daß die zweite Recheneinheit (8) ein Alarmsignal an die erste Recheneinheit gibt, wenn die erste Recheneinheit (3) bei einem Antwortsignal den Fehlerzähler nicht erniedrigt.

6. Verfahren nach Anspruch 1, dadurch gekennzeichnet, daß der Befehlssatz einen Maschinenbefehlssatz eines Microcontrollers, vorzugsweise einen Assembler-Befehlssatz, darstellt.

7. Verfahren nach Anspruch 1, dadurch gekennzeichnet, daß als Rechenvorschrift eine Folge von Befehlen vorgegeben werden, daß das Ergebnis eines ersten Befehls oder ein Bedingungsbits des ersten Befehles bei der Abarbeitung eines zweiten Befehles berücksichtigt wird.

8. Verfahren nach Anspruch 7, dadurch gekennzeichnet, daß die Folge von Befehlen nacheinander abgearbeitet wird, wobei mit dem Startwert der erste Befehl abgearbeitet wird und das Ergebnis des ersten Befehls als Startwert für den zweiten Befehl verwendet wird, und daß das Ergebnis des zweiten Befehls an die zweite Recheneinheit (8) als Endergebnis geführt wird.

9. Verfahren nach Anspruch 1, dadurch gekennzeichnet, daß bei der Überprüfung der Funktionsfähigkeit der Recheneinheit (3) mindestens ein Bedingungsbit des abgearbeiteten Befehls auf einen richtigen Wert hin überprüft wird.

**Claims**

1. Method for checking the reliability performance of a first calculation unit (3) by a second calculation unit (8), which specifies a calculation instruction and a starting value for the first calculation unit (3), with the first calculation (3) calculating a result by using the starting value and the calculation instruction and applying the result to the second calculation unit (8), which compares the result with a comparison result, characterised in that an instruction of the instruction set is preset as a calculation instruction which the first calculation unit (3) uses to run a program or execute a calculation instruction.

2. Method in accordance with claim 1, characterised in that the calculation instruction contains at least an arithmetic instruction and/or a logic instruction and/or a bitset instruction and/or a comparison instruction and/or a shift instruction and/or a transfer instruction and/or a jump instruction of the instruction set used.

3. Method in accordance with claim 1, characterised in that the second calculation unit (8) cyclically stipulates different calculation instructions and different starting values to the first calculation unit (3).

4. Method in accordance with claim 3, characterised in that the different calculation instructions for the same instruction set have different instructions.

5. Method in accordance with claim 1,

characterised in that the second calculation unit (8) applies an error signal to the first calculation unit (3) if the result calculated by the first calculation unit (3) does not agree with the corresponding comparison result, that the first calculation unit (3) increments an error counter by a predetermined value on receipt of an error signal, that the second calculation unit (8) supplies an answer signal to the first calculation unit (3) if the result is correct, that the first calculation unit (3) decrements the error counter by the predetermined value 1 on receipt of an answer signal, that the second calculation unit (8) checks the decrementing of the error counter, and that the second calculation unit (8) applies an alarm signal to the first calculation unit if the first calculation unit (3) does not decrement the error counter in the event of an answer signal.

6. Method in accordance with claim 1, characterised in that the instruction set represents a machine instruction set of a microcontroller, preferably an Assembler instruction set.

7. Method in accordance with claim 1, characterised in that a sequence of instructions which takes account of the result of a first instruction or a condition bit of the first instruction when executing a second instruction, is preset as a calculation instruction.

8. Method in accordance with claim 7, characterised in that the sequence of instructions is executed in turn, with the starting value of the first instruction being executed and the result of the first instruction being used as a starting value for the second instruction, and that the result of the second instruction is applied to the second calculation unit (8) as a final result.

9. Method in accordance with claim 1, characterised in that when checking the reliability performance of the calculation unit (3) at least one condition bit of the executed instruction is checked for the correct value.

**Revendications**

1. Procédé de contrôle de l'aptitude au fonctionnement d'une première unité de calcul (3) au moyen d'une seconde unité de calcul (8) qui fournit à la première unité de calcul (3) une prescription de calcul et une première valeur de lancement, selon lequel la première unité de calcul (3) calcule un résultat en utilisant la valeur de lancement et la prescription de calcul et transmet le résultat à la seconde unité de calcul (8) qui compare le résultat à un résultat de comparaison, caractérisé en ce qu'il est prévu, préfixée en tant que prescription de calcul, une instruction de la série de d'instructions que la première unité de calcul (3) utilise pour exécuter un programme ou une prescription de calcul.

2. Procédé suivant la revendication 1, caractérisé en ce que la prescription de calcul comprend au moins une instruction arithmétique et/ou une instruction logique et/ou une instruction de fixation de bit et/ou une instruction de comparaison et/ou une instruction de décalage et/ou une instruction de transfert et/ou une instruction de saut de la série d'instructions utilisée.

3. Procédé suivant la revendication 1, caractérisé en ce que la seconde unité de calcul (8) fournit cycliquement à la première unité de calcul (3) différentes prescriptions de calcul et différentes valeurs de lancement.

4. Procédé suivant la revendication 3, caractérisé en ce que différentes prescriptions de calcul comprennent, pour le même type d'instruction, différentes instructions.

5. Procédé suivant la revendication 1, caractérisé en ce que la seconde unité de calcul (8) envoie un signal d'erreur à la première unité de calcul (3) lorsque le résultat calculé par la première unité de calcul (3) ne coïncide pas avec le résultat de comparaison correspondant, en ce qu'à réception d'un signal d'erreur, la première unité de calcul (3) augmente un compteur d'erreurs d'une valeur préfixée, en ce que, dans le cas d'un résultat exact, la seconde unité de calcul (8) envoie un signal de réponse à la première unité de calcul (3), en ce qu'à réception d'un signal de réponse, la première unité de calcul (3) diminue le compteur d'erreurs de la valeur préfixée, en ce que la seconde unité de calcul (8) contrôle la diminution du compteur d'erreurs et en ce que la seconde unité de calcul (8) envoie un signal d'alarme à la première unité de calcul lorsque, dans le cas d'un signal de réponse, la première unité de calcul (3) ne diminue pas le compteur d'erreurs.

6. Procédé suivant la revendication 1, caractérisé en ce que la série d'instructions correspond à une série d'instructions machine de micro-contrôleur, de préférence une série d'instructions d'assembleur.

7. Procédé suivant la revendication 1, caractérisé en ce qu'une suite d'instructions est préfixée en tant que prescription de calcul et en ce qu'il est tenu compte du résultat d'une première instruction ou d'un bit de condition de la première instruction lors de l'exécution d'une seconde instruction.

**8.** Procédé suivant la revendication 7, caractérisé en ce que la suite d'instructions est exécutée successivement, la première instruction étant exécutée avec la valeur de lancement et le résultat de la première instruction étant utilisé comme valeur de lancement pour la seconde instruction, et en ce que le résultat de la seconde instruction est envoyé en tant que résultat final à la seconde unité de calcul (8).

**9.** Procédé suivant la revendication 1, caractérisé en ce, lors du contrôle de l'aptitude au fonctionnement de l'unité de calcul (3), au moins un bit de condition de l'instruction exécutée est contrôlé en ce qui concerne une valeur exacte.

**FIG 1**

**FIG 2**

## FIG 3

| | Rechnung 0 | Rechnung 1 | Rechnung 2 | Rechnung 3 |
|---|---|---|---|---|
| Arithmetik Befehle | ADD MUL CPL SUBB DIVL | ADDCB DIV CPLB SUBC | SUB MULU NEGB ADDB DIVU | SUBCB DIVLU NEG ADDC |
| Logische Befehle | ANDB XOR | OR | ORB BXOR | AND XORB |
| Bitset Befehle | BSET BAND | BCLR BOR | BMOV BFLFL | BMOVN BCMP BFLDH |
| Vergleich | CMPB | CMP | CMPI2 | CMPD1 |
| Schieben | SHR | SHL ASHR | ROR | ROL |
| Transfer | MOV | MOVB | MOVBZ | MOVBS |
| Sprung | JMPA JNB | JMPR JNBS | JB | JBC |

## FIG 4

| Startwert | | Ergebnis 0 | Ergebnis 1 | Ergebnis 2 | Ergebnis 3 |
|---|---|---|---|---|---|
| 0 | 155C | B246 | 09BE | E037 | E592 |
| 1 | DFDB | ACCD | | | |
| 2 | | | | | |
| 3 | | | | | |
| 4 | | | | | |
| 5 | | | | | |
| 6 | | | | | |
| 7 | | | | | |
| 8 | | | | | |
| 9 | | | | | |

**FIG 5**

**FIG 6**

EP 0 898 745 B1

**FIG 7**

**FIG 8**

13